# FASCICULE DE BREVET EUROPEEN

(11) **EP 3 007 876 B1**
(45) Date de publication et mention de la délivrance du brevet: **26.08.2020**
(21) Numéro de dépôt: 14728989.6
(22) Date de dépôt: 10.06.2014
(51) Int. Cl.: B29C 48/35, B29C 48/31, B29C 48/08, B29C 43/24, B29C 48/30, B29C 48/92

(54) **FILIÈRE POUR LA FABRICATION D'UN FILM PAR EXTRUSION**
DÜSE ZUR HERSTELLUNG EINER FOLIE DURCH EXTRUSION
DIE FOR MANUFACTURING A FILM BY EXTRUSION

(30) Priorité: 10.06.2013 FR 1355322
(43) Date de publication de la demande: 20.04.2016
(73) Titulaire: Blue Solutions, 29500 Ergué Gabéric (FR)
(72) Inventeur: LE GAL, Guy, F-29000 Quimper (FR)
(74) Mandataire: Regimbeau
(86) Numéro de dépôt international: PCT/EP2014/061998
(87) Numéro de publication internationale: WO 2014/198706

(56) Documents cités:
- EP-A2- 1 190 834
- DE-A1-102005 020 432
- US-A- 2 624 914
- US-A- 3 096 543
- US-A- 3 956 056
- US-A- 4 060 368
- US-A1- 2012 024 226
- US-A1- 2013 020 737
- US-B1- 6 287 105

## Description

La présente invention concerne le domaine des filières pour la fabrication de films par extrusion.

La présente invention trouve notamment application dans le domaine de la fabrication par extrusion de films pour la réalisation d'ensembles de stockage d'énergie électrique, tels que des batteries. L'invention s'applique par exemple à la réalisation d'un film de cathode ou d'électrolyte, notamment dans le cas d'une batterie lithium polymère pour laquelle on munit la batterie d'un électrolyte solide.

On connaît déjà dans l'état de la technique des filières pour l'extrusion de films plats. Ces filières sont généralement placées en sortie d'une vis d'extrusion ou d'une pompe d'alimentation en matière première fondue et permettent de modifier le profil du flux de matière visqueuse qui passe ainsi généralement d'un écoulement cylindrique à un écoulement à plat.

Lorsque l'on cherche à fabriquer un film de batterie, il est important que le film à la sortie de la filière soit le plus régulier possible en terme d'épaisseur et de vitesse de sortie, et ce en tout point de la largeur d'extrusion, sans quoi le film pourrait être endommagé lors de l'étape de laminage qui suit directement l'étape d'extrusion. Lorsque le film n'est pas régulier, le laminage peut en effet générer des faiblesses mécaniques ou des sous-épaisseurs provoquant des variations des caractéristiques électriques qui nuisent au fonctionnement de la batterie préparée à l'aide du film.

Or, lors du passage dans la filière, il se produit des pertes de charge qui génèrent souvent des hétérogénéités dans le film. De ce fait le film a notamment tendance à être plus fin à ses extrémités transversales que dans sa partie centrale en sortie de filière. De plus, les comportements mécaniques de la filière (notamment une flexion de la partie centrale de la filière due à la pression) peuvent également générer des hétérogénéités dans le film en sortie.

Pour résoudre ce type de problèmes, on connaît déjà des filières comprenant deux parties entre lesquelles est formée un conduit d'écoulement (ou empreinte d'écoulement). Au moins une des parties bordant le conduit comprend une portion en forme de lèvre configurée pour être déformable élastiquement et s'étendant au voisinage de l'embouchure de sortie du conduit et des vis de réglages destinées à appuyer sur différentes fractions de la lèvre, selon sa dimension transversale, pour modifier sa distance relativement à l'autre partie de la filière.

Toutefois, ce type de filière en raison de l'encombrement des vis de réglage en sortie de la filière, ne permet pas de placer les moyens de laminage positionnés immédiatement à la sortie de la filière, à proximité immédiate de ladite sortie. Or, la proximité des cylindres de laminage de l'embouchure de la filière permet d'améliorer la qualité du film fini, en en limitant le rétreint transversal, phénomène qui peut se produire lorsque le film n'est pas placé sur un support. Les vis de réglage d'entrefer telles que décrites ci-dessus sont en effet trop encombrantes pour les implanter au plus proche des cylindres de laminage tout en conservant une courte distance entre la sortie de filière et le point de convergence des cylindres de laminage.

Le document US2013/020737 décrit une filière pour l'extrusion d'un film comprenant deux blocs définissant entre eux un conduit d'écoulement, le bloc supérieur comprenant une portion déformable élastiquement au voisinage de l'embouchure de sortie du conduit et des moyens de réglage associés. Plus précisément, les moyens de réglage représentés sur la figure 4 de ce document comprennent une pièce d'appui associée à des moyens filetés de réglage.

D'autres solutions connues de l'état de la technique sont divulguées dans les documents DE 102005020432, US 3956056, EP 1190834 et US 4060368.

Le document US 2012/024226 décrit un dispositif conforme au préambule de la revendication 1.

La filière selon l'invention a pour but de résoudre les problèmes précités.

A cette fin, l'invention propose une filière pour la fabrication d'un film par extrusion selon la revendication 1.

Selon une autre caractéristique avantageuse de l'invention, les moyens de sollicitation comprennent une pluralité de pièces d'appui qui s'étendent selon une direction générale perpendiculaire au plan d'écoulement, et sont configurées et positionnées pour être en appui par une première de leur extrémité sur différentes fractions de la portion déformable réparties selon la direction transversale de la filière longeant l'embouchure du conduit, les secondes extrémités des pièces d'appui, distantes de la sortie de filière, étant associées à des moyens de réglages adaptés pour modifier la position de chacune de ces pièces de façon indépendante de celle d'au moins une autre pièce d'appui.

Ainsi, comme dans l'état de la technique, grâce à la portion déformable située à l'extrémité d'un des blocs au moins de la filière, on peut régler au mieux l'entrefer entre les deux blocs. Les pièces d'appui permettent de faire varier le réglage de la position de la portion déformable selon la direction transversale de la filière, permettant un réglage encore plus précis que selon l'état de la technique grâce aux modalités conformes à l'invention qui seront décrites par la suite.

De plus, le fait de délocaliser les moyens de réglage pour qu'ils ne soient plus à l'embouchure de la filière mais qu'une pièce d'appui soit interposée entre ceux-ci et la portion déformable permet de diminuer l'encombrement du système de réglage à l'extrémité de la filière, et de bénéficier d'une liberté de conception de la filière inégalée. On peut donc conformer la filière de sorte qu'elle soit positionnée au plus près des cylindres.

De préférence, le corps du ou d'au moins l'un des blocs présentant une surface d'extrémité s'étendant dans une direction générale transversale au plan d'écoulement et adjacente à l'embouchure de sortie du conduit, les moyens de sollicitation sont configurés de sorte que les moyens de réglage s'étendent en amont de la surface d'extrémité relativement à la direction d'écoulement. Ils ne sont ainsi pas positionnés entre la surface d'extrémité de la filière et les cylindres de laminage.

Les pièces d'appui sont disposées préférentiellement essentiellement sur toute la dimension transversale de la filière. Elles peuvent toutefois n'être disposées que sur une portion de la filière selon cette dimension. Elles sont également disposées de façon à être côte à côte et de préférence en contact l'une avec l'autre. Cela permet ainsi d'augmenter la précision du réglage. Chaque pièce d'appui est associée de préférence à un moyen de réglage respectif.

Chaque levier est notamment formé d'un L à deux branches articulé en rotation sur le corps du bloc comportant la portion réglable, la branche la plus courte comprenant une extrémité en appui sur la deuxième extrémité de la pièce d'appui correspondante, afin de pousser cette pièce vers la portion déformable, tandis que la branche la plus longue coopère avec le moyen de réglage.

Le rapport entre, d'une part la distance entre l'axe de rotation du levier relativement au corps du bloc correspondant et le lieu d'appui de chaque moyen de réglage sur le levier, et, d'autre part la distance entre l'axe de rotation et le lieu d'appui du levier sur chaque pièce d'appui, est supérieur à 2, de préférence entre 4 et 6, avantageusement de l'ordre de 5. Un levier dont le rapport est supérieur à 1 est toutefois bien entendu également couvert par l'invention.

Les leviers permettent en effet de régler l'entrefer entre les deux blocs de façon encore plus précise puisque la position de la portion déformable peut être réglée très finement sans que le pas du moyen de réglage choisi ne soit un facteur limitant.

Le bloc muni de la portion déformable possède alors de préférence une dépression complémentaire d'une saillie formée sur le levier, notamment au voisinage du lieu d'appui du levier sur la pièce d'appui, pour permettre de maintenir ce levier et la pièce d'appui correspondante en position sur le bloc.

La filière peut également comprendre au moins un lot de plusieurs leviers en cascade, le ou chaque lot étant placé entre la ou au moins l'une des pièces d'appui et le moyen de réglage respectif, permettant de démultiplier le rapport entre le déplacement de chaque moyen de réglage et celui de chaque pièce d'appui associée audit moyen de réglage, ce qui permet d'augmenter la finesse du réglage en fonction des besoins.

Les blocs sont essentiellement symétriques relativement au plan de l'écoulement de sorte que l'embouchure forme une saillie par rapport au reste de la filière. Cela permet donc de rapprocher encore plus la filière des cylindres de laminage et l'embouchure de la filière de la zone de convergence des cylindres au niveau de laquelle l'entrefer entre les cylindres est le plus faible, et correspondant à la zone de laminage. L'embouchure de la filière peut notamment être située selon la direction de l'écoulement entre au moins une partie des cylindres et la zone de convergence.

Les surfaces d'extrémité des blocs, qui s'étendent dans une direction générale transversale au plan d'écoulement adjacentes à l'embouchure de sortie du conduit, sont concaves et de préférence globalement de géométrie cylindrique de révolution, complémentaires de l'enveloppe de cylindres de laminage situés en aval. La filière épouse donc la forme des cylindres de laminage.

Le corps du ou des blocs comprenant la portion déformable comporte une surface d'extrémité également concave, les pièces d'appui suivant le contour concave du corps en étant d'épaisseur essentiellement constante. Les pièces d'appui sont donc également concaves.

Cette configuration, permise par la délocalisation des moyens de réglage en amont de la filière, permet de rapprocher l'embouchure de la filière de la zone de convergence des cylindres, tout en conservant une conformation la plus massive possible du corps de la filière au voisinage de l'embouchure, donnant à celle-ci une rigidité au voisinage de l'embouchure qui permet de diminuer la déformation élastique de l'embouchure et donc d'augmenter la régularité du film en sortie.

L'épaisseur de la portion déformable considérée selon une direction perpendiculaire au plan de l'écoulement est comprise entre 2 et 5 mm, de préférence de l'ordre de 4 mm. Sa longueur dans la direction de l'écoulement est de préférence au moins supérieure à 2.5 fois son épaisseur, ce qui facilite sa déformation. Elle forme en fait de préférence une lèvre s'étendant dans le plan d'écoulement en saillie du corps du bloc selon la direction d'écoulement.

La portion déformable possède une épaisseur sensiblement constante sur l'essentiel de sa longueur, mais présente une nervure en saillie formant une surépaisseur au niveau de son extrémité libre adjacente à la sortie de la filière pour servir de retenue aux moyens de sollicitation, notamment à la ou aux pièces d'appui.

Chaque pièce d'appui présente une largeur inférieure à 50 mm selon la dimension transversale de la filière, de préférence supérieure à 20 mm et avantageusement comprise entre 20 et 30 mm. Cette largeur est la largeur optimale pour permettre un réglage fin de l'entrefer sur toute la largeur de la filière tout en économisant des coûts de fabrication. On pourrait en effet envisager de multiplier le nombre de pièces d'appui en diminuant la largeur de chacune (ce qui augmenterait également les coûts de fabrication) mais cela ne permettrait pas d'améliorer le réglage selon cette direction car la portion déformable est une portion d'un seul tenant et l'action d'une pièce d'appui sur une fraction de celui-ci a une influence sur le positionnement des fractions adjacentes.

Chaque pièce d'appui peut présenter une épaisseur comprise entre 2 et 5 mm, typiquement de l'ordre de 4 mm, une épaisseur réduite permettant d'augmenter le caractère massif du corps de la filière, et une longueur supérieure à 10 fois, avantageusement supérieure à 15 fois, son épaisseur. Elle est notamment réalisée en métal.

Les moyens de réglage peuvent comprendre au moins une vis de réglage, la ou chaque vis étant apte à exercer une action (par le biais d'un ou plusieurs leviers) sur la deuxième extrémité de la ou l'une des pièces d'appui.

Les moyens de réglage peuvent également comprendre au moins une pièce de dilatation thermique, la ou chaque pièce de dilatation étant apte à exercer une action sur la ou l'une des pièces d'appui (éventuellement par le biais d'un ou plusieurs leviers), et au moins un moyen de chauffage associé respectivement à la ou chaque pièce de dilatation pour faire varier les dimensions de la pièce de dilatation thermique de façon contrôlée en fonction de la température. Cela permet de régler plus finement la position du moyen de réglage.

Le moyen de dilatation peut d'ailleurs être une vis et le moyen de chauffage un écrou chauffant par exemple.

Le moyen de chauffage peut être destiné à régler la position d'une pièce d'appui en complément d'une vis de réglage standard. On peut alors effectuer une première étape de réglage d'approche à l'aide de la vis standard, et lorsqu'on se trouve au voisinage de la position souhaitée, effectuer un réglage fin à l'aide du moyen de chauffage.

Le moyen de réglage peut être actionné manuellement ou automatiquement, par exemple en fonction de mesures de l'épaisseur (ou éventuellement de la vitesse) locale du film réalisée avec un équipement situé en sortie de filière ou de laminage. Un tel équipement de mesure peut commander le moyen de chauffage ou un moteur qui actionne chacune des vis de réglage pour régler la filière de façon à obtenir le film de meilleure qualité possible à tout moment au cours de la fabrication.

La portion déformable de la filière est également de préférence monobloc sur toute la dimension transversale de la filière, pour éviter les fuites de matière et des hétérogénéités au niveau de l'épaisseur en sortie de filière.

On notera également que chacun des deux blocs peut posséder une portion déformable associée à des moyens de sollicitation tels que décrits ci-dessus.

D'autres caractéristiques, buts et avantages de la présente invention apparaitront à la lecture de la description détaillée qui va suivre et en regard des dessins annexés donnés à titre d'exemples non limitatifs et sur lesquels :
- la figure 1 représente une vue schématique en coupe transversale d'une filière conforme à la présente invention,
- la figure 2 représente une vue à échelle agrandie des moyens de sollicitation conformes à la présente invention et
- la figure 3 représente une vue en perspective d'une filière conforme à une variante de la présente invention afin d'illustrer notamment la réalisation des moyens de sollicitation sous forme d'une pluralité de pièces d'appui.

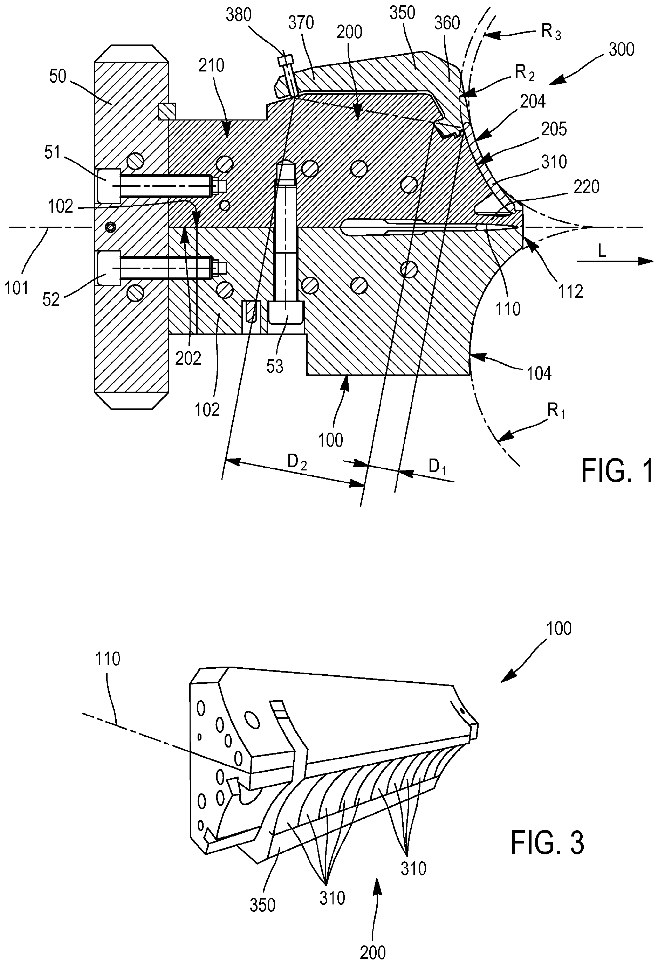

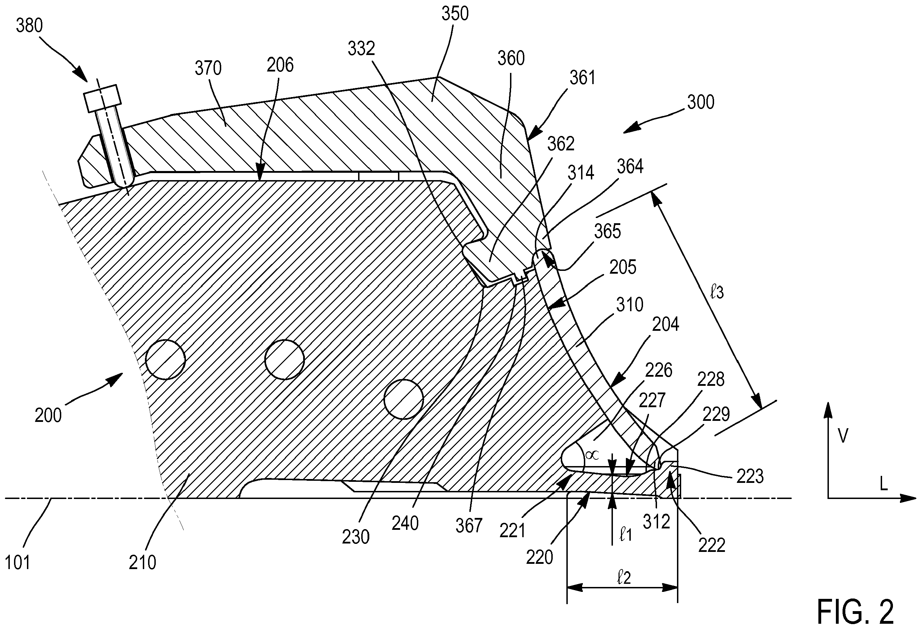

On va maintenant décrire un mode de réalisation de la filière selon l'invention, en regard de la coupe de la filière telle que représentée sur les figures 1 et 2.

La filière conforme à la présente invention représentée sur la figure 1 comprend deux blocs principaux : un premier bloc 100 fixe et un deuxième bloc 200 réglable.

Les deux blocs 100 et 200 sont fixés l'un par rapport à l'autre à l'aide de moyens référencés schématiquement 50 à 53 sur la figure 1 annexée. Ces moyens 50 à 53, classiques en soi, et qui peuvent faire l'objet de nombreuses variantes de réalisation, ne seront pas décrits plus en détail par la suite.

Selon la représentation arbitraire donnée sur la figure 1, le premier bloc fixe 100 forme la partie inférieure de la filière tandis que le deuxième bloc réglable 200 forme la partie supérieure de la filière. Cependant la disposition inverse peut être prévue. Comme illustré sur la figure 3, le bloc réglable 200 peut en effet former la partie inférieure de la filière, tandis que le bloc fixe 100 forme alors la partie supérieure de la filière. Selon une autre variante conforme à la présente invention, les deux blocs 100 et 200 peuvent être réglables. La filière pourrait également être disposée de façon à former un film vertical.

Entre ces deux blocs 100 et 200 subsiste un espace 110 formant le conduit ou l'empreinte permettant l'écoulement de la matière provenant de l'extrudeuse et la transformation de l'écoulement de matière d'un écoulement de forme cylindrique, en entrée de la filière, à un écoulement en forme de film, soit essentiellement plan, à la sortie de la filière. L'espace 110 situé entre les deux blocs 100 et 200 est donc de forme cylindrique à l'extrémité d'entrée de la filière et est ménagé uniquement en partie centrale de la filière. Il est d'épaisseur plus fine et s'étend essentiellement sur toute la dimension transversale de la filière à l'extrémité opposée 112 de la filière, également appelée embouchure par laquelle sort le film formé dans la filière. La dimension transversale précitée s'étend perpendiculairement au plan des figures 1 et 2.

Les blocs, fixe 100 et réglable 200, peuvent faire l'objet de nombreuses variantes de réalisation. Ils comprennent de préférence sur une face, des surfaces d'appui complémentaires 102, 202 formant un plan de joint 101, également appelé plan de l'écoulement, lorsque les deux blocs 100, 200 sont accolés. Les faces précitées 102, 202 sont globalement planes, mis à part les évidements formés pour réaliser l'espace d'écoulement 110. Ce plan de joint 101 contient la direction d'écoulement L de la matière dans la filière, parallèle au plan de la figure 1, ainsi que la direction transversale perpendiculaire au plan de la figure.

Les surfaces d'extrémité des deux blocs 100 et 200 dirigées vers le dispositif de laminage situé en aval de la filière sont référencées 104, 204. Le dispositif de laminage précité n'est pas représenté sur les figures annexées, pour simplifier l'illustration. Il est composé généralement d'au moins une paire de cylindres de laminage, qui convergent au niveau d'une génératrice située dans le plan de joint 101. Les cylindres sont placés respectivement l'un en regard de la surface 104 du bloc 100 et l'autre en regard de la surface 204 du bloc 200. Ces surfaces 104 et 204 qui s'étendent dans une direction générale transversale au plan de joint 101 sont de préférence concaves et globalement de géométrie cylindrique de révolution, complémentaires de l'enveloppe des cylindres de laminage situés en aval afin de permettre à l'embouchure 112 d'être située au plus près de la zone de convergence des cylindres, comme on l'expliquera par la suite.

Les blocs fixe et réglable 100, 200 de la filière sont réalisés de préférence en métal. Le bloc fixe 100 comprend un corps réalisé dans la masse, d'un seul tenant, de façon à être rigide et à ne pas se déformer en cours d'utilisation.

Le bloc réglable 200 comprend également un corps 210 mais celui-ci comprend, à son extrémité destinée à être placée au voisinage de l'embouchure 112, une portion déformable 220, formant une lèvre s'étendant selon toute la dimension transversale de la filière (orthogonale au plan des figures 1 et 2), vers l'extérieur dans la direction de l'écoulement (également appelée direction longitudinale L).

L'épaisseur l1 de la lèvre 220 considérée selon une direction V (correspondant ici à la direction verticale) perpendiculaire au plan de l'écoulement est de préférence au moins sensiblement constante entre sa base 221 raccordée au corps 210 et son extrémité libre 222. Cette épaisseur l1 est typiquement de quelques millimètres, notamment entre 2 et 5 mm et plus particulièrement 4 mm. Sa longueur l2, dans la direction de l'écoulement L est typiquement au moins supérieure à 2,5 fois son épaisseur, et préférentiellement de l'ordre de 20 à 30 mm. Du fait notamment de ses dimensions, la lèvre 220 est donc déformable en flexion selon ladite direction V.

La lèvre 220 est de préférence réalisée en pratiquant un évidement 226 dans le corps 210 entre la lèvre 220 et le reste du corps, plus précisément dans la surface 205 du corps 210 destinée à être placée au plus près des cylindres de laminage.

Selon le mode de réalisation représenté sur les figures 1 et 2, l'évidement 226 est formé d'une gorge en forme de dièdre présentant au niveau de son fond un angle α de l'ordre de 45° et dont l'embouchure débouche sur la surface 205.

Plus précisément encore comme on le voit sur les figures 1 et 2, de préférence la géométrie de l'évidement 226 est telle que la lèvre 220 possède une épaisseur sensiblement constante sur l'essentiel de sa longueur, entre le fond de l'évidement 226 et l'embouchure de sortie de la filière, mais néanmoins présente une nervure en saillie 223 formant une surépaisseur au niveau de son extrémité libre 222 adjacente à la sortie de la filière. Pour cela la face 227 de l'évidement 226, qui délimite la lèvre 220 possède de préférence une dépouille 228 au voisinage de son extrémité libre, formant un évidement 226 à bords convergents.

Cette surépaisseur 223 sert de retenue aux moyens de sollicitation 300 qui vont être décrits par la suite.

Selon le mode de réalisation préférentiel représenté sur les figures 1 et 2 annexées, les moyens de sollicitation 300 comprennent en combinaison au moins une pièce d'appui 310, un levier 350 et des moyens 380 d'actionnement et de réglage du levier 350, appelé indifféremment moyen de réglage ou moyen d'actionnement dans la suite de la demande.

Le bloc réglable 200 comprend ainsi au moins une pièce d'appui 310 destinée à solliciter la lèvre 220. Plus précisément le bloc réglable 200 comprend de préférence une pluralité de pièces d'appui 310. Celles-ci s'étendent contre la surface 205 du corps, essentiellement selon la direction V presque verticale pour exercer une force sur la portion déformable 220 selon cette direction.

Plus particulièrement, chaque pièce d'appui 310 suit le contour concave de la surface 205 du corps 210 du bloc 200 à son extrémité à laquelle se trouve l'embouchure 112. De ce fait, la surface d'extrémité 204 du bloc réglable, qui est délimitée par les moyens de sollicitation et notamment les pièces d'appui 310 dans le mode de réalisation ici décrit, possède le même profil concave que celui de la surface 205. Les pièces d'appui 310, en métal, sont d'épaisseur constante et réduite, par exemple entre 2 et 5 mm et typiquement de l'ordre de 4 mm, de sorte que leur encombrement est minimal. De ce fait, pour un même encombrement, le corps 210 de la filière peut être très massif, et ainsi bien résister à la déformation due à la pression. La longueur l3 de chaque pièce d'appui 310, selon la direction générale V, est typiquement supérieure à 10 fois, avantageusement supérieure à 15 fois, son épaisseur.

Comme on le voit sur la figure 3, il est prévu de préférence une pluralité de pièces d'appui 310 disposées côte à côte sur toute la dimension transversale de la surface 205 du corps 210 de bloc 200, à proximité de l'embouchure 112.

La dimension, dénommée largeur, des pièces d'appui est inférieure à 50 mm selon la dimension transversale de la filière et de préférence supérieure à 20 mm.

Ces pièces 310 sont ainsi de préférence chacune configurées pour présenter une largeur, selon cette direction transversale, d'environ 20 à 30 mm.

Il est en effet peu intéressant de diminuer de façon considérable la dimension transversale des pièces d'appui 310 puisque la portion déformable est en une seule pièce et que l'action de chaque pièce d'appui 310 sur la portion déformable 220 a donc un effet sur la fraction contre laquelle elle est en appui mais également sur les fractions de la lèvre déformable 220 situées au voisinage de ladite fraction. Le réglage ne serait donc pas forcément plus fin si on multipliait à l'infini le nombre de pièces d'appui 310.

Les inventeurs ont déterminé que cette largeur est un juste compromis entre la possibilité d'un réglage local de la position de la portion déformable 220 et le coût de la filière, l'augmentation du nombre de pièces d'appui 310 ne permettant pas d'améliorer le réglage étant donné que la portion déformable 220 est d'un seul tenant et que la déformation locale de celle-ci n'est donc pas sans effet sur la déformation des portions voisines.

Une pièce intermédiaire, également appelée levier 350, est associée à chaque pièce 310. Chaque levier 350 est porté par le bloc réglable 200 et est en appui sur l'extrémité de la pièce d'appui 310 éloignée de l'embouchure 112. Les leviers sont également disposés côte à côte sur toute la dimension transversale du bloc réglable 200.

Ainsi les pièces d'appui 310 sont disposées entre la lèvre déformable 220 et les leviers 350. Chaque pièce d'appui 310 repose par une première extrémité 312 sur la lèvre 220 et est en contact par son extrémité opposée 314 contre un des leviers 350.

Chaque levier 350 forme un L à deux branches 360, 370.

La branche 360 la plus courte comprend une extrémité 364 en appui sur l'extrémité supérieure 314 de la pièce d'appui 310 correspondante, afin de pousser cette pièce 310 vers le bas, pour qu'elle influe sur la position de la portion réglable 220.

Plus précisément les tranches des deux extrémités 312 et 314 de chaque pièce d'appui 310 sont globalement arrondies convexes. La surépaisseur 223 prévue sur l'extrémité libre de la lèvre déformable 220 possède de préférence sur sa face dirigée vers l'intérieur de l'évidement 226, une empreinte ou gorge concave 229 dans laquelle pénètre l'extrémité adjacente 312 de chaque pièce d'appui 310 afin de maintenir celle-ci en prise avec la lèvre 220 et éviter que la ou les pièce(s) d'appui n'échappe(nt) à la lèvre sous la sollicitation des moyens 350. De même l'extrémité 364 du levier 350 possède de préférence sur sa face adjacente à la pièce 310 correspondante une empreinte ou gorge concave 365 dans laquelle pénètre l'extrémité adjacente 314 de la pièce d'appui 310 afin de maintenir celle-ci en prise avec le levier et éviter que la pièce d'appui n'échappe au levier 350.

La branche 360 la plus courte, placée contre la surface 205 du corps du bloc 200, s'emboîte par son extrémité libre 364 servant d'appui à la pièce 310, dans une forme complémentaire 230 du corps 210 du bloc réglable 200.

La branche 370 la plus longue, est placée contre la surface supérieure 206 du bloc 200 globalement parallèle au plan de joint 101.

A l'extrémité de la branche 370 la plus longue du levier 350 en L est placée au moins une vis 380 formant moyen d'actionnement de la position du levier 350 et ainsi, de la position de la pièce d'appui correspondante 310 et de la lèvre déformable 220.

A cette fin, la vis 380 est de préférence en prise dans un taraudage complémentaire formé dans le levier 350 au voisinage de l'extrémité de sa branche 370 la plus longue et repose par son extrémité libre sur la surface supérieure 206 du corps 210.

Le levier 350 est également en appui contre le corps 210 de bloc 200 en un lieu (332) situé également au voisinage de l'extrémité de la branche 360 la plus courte du levier en L, au niveau d'une saillie 362 ménagée à cette extrémité, vers l'intérieur de la concavité du L, et qui s'engage dans un évidement 230 correspondant du corps 210.

Le levier 350 peut ainsi être mobile en rotation autour d'un axe correspondant essentiellement à la zone (332) précitée par laquelle le levier 350 est en appui sur le bloc 210. Ce point de contact pourrait être remplacé par une articulation autour d'un axe.

Plus précisément selon le mode de réalisation représenté sur les figures 1 et 2, la saillie 362 possède globalement une section droite rectangulaire et l'évidement 230 a également une section droite globalement rectangulaire complémentaire de celle de la saillie 362. On entend par « complémentaire » le fait que la section droite de l'évidement 230 est globalement homothétique de celle de la saillie 362 mais cependant de dimension légèrement supérieure pour permettre un certain débattement à pivotement de la saillie 362 dans l'évidement 230. Plus précisément encore l'axe de rotation du levier 350 par rapport au bloc 200, sous l'effet des moyens d'actionnement 380, est formé par l'angle supérieur de l'évidement 230, au niveau de la zone (332), selon la représentation des figures 1 et 2.

On notera que selon la représentation donnée sur les figures 1 et 2, la distance D1 entre l'axe (332) et le lieu d'appui 365 du levier 350 sur la pièce d'appui 310 est bien inférieure, plus particulièrement, environ 5 fois inférieure, à la distance D2 entre l'axe (332) et le lieu d'appui de la vis d'actionnement 380 sur le corps 210. D'une manière plus générale selon l'invention, le rapport de levier de la pièce intermédiaire 350, c'est-à-dire le rapport D2/D1 est supérieur à 2 et de préférence entre 4 et 6. Si l'encombrement le permet, ce rapport peut dépasser 10.

Le bloc 200 possède également de préférence une dépression 240 complémentaire d'une saillie 367 formée sur la pièce intermédiaire ou levier 350, pour permettre de garder ce levier 350 et la pièce d'appui 310 correspondante en position sur le bloc 200. Le corps 210 du bloc déformable 200 comprend à cette fin une rainure 240 dans laquelle est destinée à s'engager les saillies 367 de chacun des leviers 350 au voisinage de leur point de contact avec la pièce d'appui 310 correspondante. La rainure 240 débouche sur une face du bloc 210 opposée au plan de joint 101. Cette coopération de forme permet d'éviter que le levier 350 et éventuellement la pièce d'appui 310 correspondante ne tombe dans le laminoir situé en sortie de la filière en cas de desserrage de la vis 380 formant moyen d'actionnement.

En variante à cette fin, la rainure 230 formée sur le corps 210 peut être à bords d'ouverture au moins légèrement convergents, tandis que la ou les saillie(s) 362 complémentaire(s) formée(s) sur le levier 350 a(ont) une forme qui s'élargit légèrement en direction de son extrémité libre. Chaque saillie 362 est engagée dans la rainure 230 par coulissement selon la direction transversale, mais ne peut être retirée par simple translation relative perpendiculairement à la surface extérieure du corps 210 et assure ainsi un maintien sécuritaire du levier 350 sur le corps 210. Chaque pièce d'appui 310 en prise d'une part sur la surépaisseur 223 de la lèvre 220 et d'autre part dans la forme complémentaire 365 du levier 350, est ainsi maintenue également en toute sécurité sur le bloc 210.

Chaque pièce intermédiaire ou levier 350 permet de faire varier la position de la pièce d'appui 310 correspondante et donc celle d'une fraction ou zone de la lèvre déformable 220, par serrage ou desserrage de la vis 380. En effet le déplacement des vis 380, dont l'extrémité est fixe relativement au corps, permet de faire pivoter le levier 350 autour de l'axe (332) et par conséquent de déplacer l'extrémité 364 du levier relativement au corps 210. Le levier sollicite les pièces d'appui 310 en rapprochement ou en éloignement du plan de joint 101. Sa présence permet donc d'avoir une grande latitude de conception dans la façon de régler la position de la pièce d'appui 310.

De préférence, chaque pièce d'appui 310 est en appui contre une pièce intermédiaire distincte 350 à son extrémité 314 opposée à la première extrémité 312 sollicitant la lèvre déformable 220. En d'autres termes il est prévu de préférence un nombre de leviers 350 identique au nombre de pièces d'appui 310, chacun des leviers 350 sollicitant une pièce d'appui 310 respective et chaque levier 350 étant associé à une vis de réglage respective 380.

Grâce au système de levier 350, on peut régler très finement la position de chaque pièce d'appui 310 agissant sur la portion déformable 220, par action sur les moyens d'actionnement 380, puisque le rapport entre la distance de déplacement du moyen d'actionnement 380 et celle de chaque pièce d'appui 310 est d'environ 5. De même, cela permet d'appliquer une force moins grande pour régler le moyen d'actionnement 380 que celle qui est appliquée sur chaque pièce d'appui 310 et donc sur la portion déformable 220.

On notera également que la filière présente à son extrémité dans laquelle est ménagée l'embouchure 112 une forme particulière définie par les surfaces précitées 104 et 204. Chaque bloc 100, 200 présente en effet à ce niveau une surface extérieure 104, 204 concave et présente plus précisément un profil complémentaire d'une portion de cylindre correspondant aux cylindres de laminage destinés à être placés en aval. La surface 104 est délimitée par le corps du bloc fixe 100 alors que la surface 204 est délimitée par les pièces d'appui 310 qui s'appuient sur une surface 205 du corps de bloc réglable 200 en suivant son contour. Plus particulièrement, les blocs 100, 200 sont essentiellement symétriques relativement au plan de l'écoulement 101 de sorte que l'embouchure 112 forme une saillie par rapport au reste de la filière. Le profil de la filière est donc assimilable à un V convexe dont l'embouchure 112 forme la pointe. Du fait de cette symétrie, on notera que la surface 205 du corps de bloc réglable est en retrait relativement à la surface 104 du corps de bloc fixe.

De cette façon, et en particulier grâce à la forme particulière concave et cylindrique, choisie pour les blocs 100 et 200, la sortie de la filière peut être placée au plus près de la zone de convergence des cylindres de laminage qui permettront de laminer le film et réduire son épaisseur en sortie de filière. Cela permet de stabiliser le film entre les étapes d'extrusion et de laminage et également de limiter le phénomène de rétreint, donc d'améliorer la qualité du film fini.

Une telle configuration est possible grâce à l'invention du fait que les moyens de réglage 380 sont éloignés de l'embouchure 112 de la filière et que le design des pièces d'appui 310 est simple, ces pièces d'appui pouvant être formées de lames plaquées contre la surface extérieure 205 du corps du bloc 200.

Les pièces d'appui 310 qui sont placées à l'extrémité de la filière et suivent donc le contour de la surface d'extrémité 205 du corps 210 de la filière, ont de ce fait également une forme concave complémentaire des portions de cylindre comme déjà indiqué plus haut. Leur appui contre le corps 210 du bloc 200 sur une grande partie de leur longueur permet d'éviter que les pièces d'appui ne flambent.

On notera que la filière selon l'invention peut comprendre de nombreuses variantes par rapport aux modes de réalisation décrits ci-dessus, par exemple :
- chaque corps de bloc 100, 200 peut être configuré d'un seul tenant ou en plusieurs pièces, la première pièce comprenant par exemple l'empreinte 110 et la deuxième pièce formant la lèvre déformable 220,
- les deux blocs 100, 200 peuvent comprendre des portions déformables 220 et des pièces d'appui 310,
- les pièces d'appui 310 peuvent ne s'étendre que sur une portion de la dimension transversale de la filière, notamment dans sa partie centrale, pour combattre l'effet de la flexion dans la partie centrale de la filière.
- les pièces d'appui 310 peuvent également ne pas être disposées rigoureusement côte à côte, c'est-à-dire rigoureusement adjacentes,
- le bloc réglable 200 peut comprendre plusieurs leviers en cascade, entre les pièces d'appui 310 et les moyens d'actionnement 380, permettant de démultiplier le rapport entre le déplacement des moyens d'actionnement 380 et celui de chaque pièce d'appui 310,
- le moyen d'actionnement 380 peut comprendre une pièce de dilatation thermique et un moyen de chauffage placé au voisinage de ladite pièce pour faire varier ses dimensions de façon contrôlée en fonction de la température,
- le profil de la filière au voisinage de l'embouchure pourrait être plan ou convexe,
- les rapports de distance D1/D2 ne sont pas limités aux valeurs précédemment décrites,
- les formes du levier 350, de chaque pièce d'appui 310 ou de de la portion déformable 220 ne sont pas limités non plus à ce qui a été précédemment décrit.

La portion ou lèvre déformable 220 est de préférence monobloc sur toute la dimension transversale de la filière, pour éviter que des fuites de matière se produisent au niveau de l'embouchure.

Sur la figure 1 on a référencé R1 le rayon de la surface concave et cylindrique 104 du bloc 100, R2 le rayon de la surface concave et cylindrique 205 du bloc 200 et R3 le rayon de la surface concave et cylindrique extérieure 204 des pièces d'appui 310. Les rayons R1 et R3 sont de préférence sensiblement identiques et complémentaires de celui des cylindres de laminage situés en aval. Le rayon R2 est supérieur au rayon R3 de la valeur de l'épaisseur des pièces d'appui 310. On notera par ailleurs que la surface extérieure 361 de la branche 360 la plus courte du levier 350 présente de préférence une continuité avec la courbure concave de la surface externe des pièces d'appui 310 afin de ne pas perturber l'implantation adjacente des cylindres de laminage avals.

## Revendications

1. Filière pour la fabrication d'un film par extrusion, comprenant deux blocs (100, 200) définissant entre eux un conduit d'écoulement (110), l'un (200) au moins des deux blocs comprenant :
- un corps (210) présentant une portion (220) configurée pour être déformable élastiquement et s'étendant au voisinage d'uneembouchure de sortie (112) du conduit, et
- des moyens réglables (300) de sollicitation de cette portion déformable (220) du corps (210) afin de déformer la portion déformable (210) pour modifier sélectivement la distance entre celle-ci et l'autre bloc (100) de la filière, lesquels moyens réglables de sollicitation (300) comprennent :
- au moins une pièce d'appui (310) positionnée pour être en appui sur la portion déformable (220) en s'étendant selon une direction générale (V) perpendiculaire à un plan (101) d'écoulement en sortie de filière définie par l'embouchure de sortie, chaque pièce d'appui (310) comprenant une première extrémité (312) appuyant sur la portion déformable (220) et
- des moyens de réglage (350, 380) également mobiles par rapport au corps (210), aptes à exercer une action sur une deuxième extrémité (314) de chaque pièce d'appui (310) opposée à la première extrémité (312) et distante de la sortie de filière afin de modifier la position ce cette pièce,
les moyens de sollicitation comprenant au moins un levier intermédiaire (350), le ou chaque levier étant placé entre la ou l'une des pièces d'appui (310), de façon à appuyer contre sa deuxième extrémité, et un moyen de réglage (380),
**caractérisée en ce que** le corps (210) du ou des blocs (200) comprenant la portion déformable comporte une surface d'extrémité (205) également globalement concave, les pièces d'appui (310) suivant le contour concave du corps (210) en étant d'épaisseur essentiellement constante.

2. Filière selon la revendication 1, **caractérisée en ce que** les moyens réglables de sollicitation comprennent une pluralité de pièces d'appui (310) qui s'étendent selon une direction transversale généralement perpendiculaire au plan d'écoulement, configurées et positionnées pour être en appui par une première de leur extrémité (312) sur différentes fractions de la portion déformable (220) réparties selon la direction transversale de la filière longeant l'embouchure du conduit, les secondes extrémités (314) des pièces d'appui (310), distantes de la sortie de filière, étant associées à des moyens de réglage (350, 380) respectifs adaptés pour modifier la position de chacune de ces pièces (310) de façon indépendante de celle d'au moins une autre pièce d'appui.

3. Filière selon l'une des revendications précédentes, **caractérisée en ce que**, le corps (210) du ou d'au moins l'un des blocs (200) présentant une surface d'extrémité (204) s'étendant dans une direction générale transversale au plan d'écoulement et adjacente à l'embouchure (112) de sortie du conduit, les moyens réglables de sollicitation sont configurés de sorte que les moyens de réglage (380) s'étendent en amont de la surface d'extrémité (205) relativement à la direction de l'écoulement (L).

4. Filière selon l'une des revendications 1 à 3, **caractérisée en ce que** chaque levier est formé d'un L à deux branches (360, 370) articulé en rotation sur le corps (210) du bloc (200) comportant la portion réglable (220), la branche (360) la plus courte comprenant une extrémité (364) en appui sur la deuxième extrémité (314) de la pièce d'appui (310) correspondante, afin de pousser cette pièce (310) vers la portion déformable (220), tandis que la branche (370) la plus longue coopère avec le moyen de réglage (380).

5. Filière selon l'une quelconque des revendications 1 à 4, **caractérisée en ce que** le rapport entre d'une part la distance (D2) entre l'axe (232) de rotation du levier relativement au corps du bloc correspondant et le lieu d'appui de chaque moyen de réglage (380) sur le levier (210) et d'autre part la distance (D1) entre l'axe de rotation (232) et le lieu d'appui (365) du levier (350) sur chaque pièce d'appui (310) est supérieur à 2.

6. Filière selon l'une des revendications 1 à 5, **caractérisée en ce que** le bloc (200) muni de la portion déformable (220) possède une dépression (240) complémentaire d'une saillie (367) formée sur le levier (350), pour permettre de maintenir ce levier (350) et la pièce d'appui correspondante (310) en position sur le bloc (200).

7. Filière selon l'une des revendications précédentes, **caractérisée en ce que** les surfaces (104, 204) d'extrémité des blocs (100, 200) qui s'étendent dans une direction générale transversale au plan d'écoulement (101) adjacentes à l'embouchure de sortie du conduit (112) sont concaves.

8. Filière selon l'une quelconque des revendications précédentes, **caractérisée en ce que** la portion déformable (220) possède une épaisseur sensiblement constante sur l'essentiel de sa longueur, mais présente une nervure en saillie (223) formant une surépaisseur au niveau de son extrémité libre (222) adjacente à la sortie de la filière pour servir de retenue aux moyens de sollicitation (300).

9. Filière selon l'une des revendications précédentes, **caractérisée en ce que** les blocs (100, 200) sont essentiellement symétriques relativement au plan de l'écoulement (101) de sorte que l'embouchure (112) forme une saillie par rapport au reste de la filière.

10. Filière selon l'une des revendications précédentes, **caractérisée en ce que** les moyens de réglage (380) comprennent au moins une pièce de dilatation thermique, la ou chaque pièce de dilatation étant apte à exercer une action sur la ou l'une des pièces d'appui, et au moins un moyen de chauffage associé respectivement à la ou chaque pièce de dilatation pour faire varier les dimensions de la pièce de dilatation thermique de façon contrôlée en fonction de la température.

11. Filière selon l'une quelconque des revendications précédentes, dans laquelle les moyens de réglage comprennent au moins une vis de réglage (380), la ou chaque vis étant apte à exercer une action sur la ou l'une des pièces d'appui (310).

12. Filière selon l'une des revendications précédentes, **caractérisée en ce que** la portion déformable (220) est monobloc sur toute la dimension transversale de la filière.

13. Filière selon l'une des revendications 1 à 12, **caractérisée en ce que** les surfaces (104, 204) d'extrémité des blocs (100, 200) qui s'étendent dans une direction générale transversale au plan d'écoulement (101) adjacentes à l'embouchure de sortie du conduit (112) sont globalement de géométrie cylindrique de révolution, complémentaires de l'enveloppe de cylindres de laminage situés en aval.

## Patentansprüche

1. Düse zur Herstellung einer Folie durch Extrusion, umfassend zwei Blöcke (100, 200), die zwischen sich einen Strömungskanal (110) bilden, wobei mindestens einer (200) der zwei Blöcke aufweist:
- einen Körper (210), der einen Abschnitt (220) aufweist, der zum elastischen Verformen ausgelegt ist und sich in der Nähe einer Ausgangsmündung (112) des Kanals erstreckt, und
- einstellbare Beanspruchungsmittel (300) dieses verformbaren Abschnitts (220) des Körpers (210), um den verformbaren Abschnitt (210) zu verformen, um selektiv den Abstand zwischen diesem und dem anderen Block (100) der Düse zu verändern,
wobei die einstellbaren Beanspruchungsmittel (300) umfassen:
- mindestens ein Abstützteil (310), das positioniert ist, um in Abstützung auf dem verformbaren Abschnitt (220) zu sein, indem es sich gemäß einer allgemeinen Richtung (V) senkrecht zu einer Strömungsebene (101) am Düsenausgang erstreckt, die von der Ausgangsmündung definiert ist, wobei jedes Abstützteil (310) ein erstes Ende (312) umfasst, das auf den verformbaren Abschnitt (220) drückt, und
- Einstellmittel (350, 380), die ebenfalls in Bezug auf den Körper (210) beweglich sind, die imstande sind, auf ein zweites Ende (314) jedes Abstützteils (310) gegenüber dem ersten Ende (312) und beabstandet vom Düsenausgang einzuwirken, um die Position dieses Teils zu verändern,
wobei die Beanspruchungsmittel mindestens einen Zwischenhebel (350) umfassen, wobei der oder jeder Hebel zwischen dem oder einem der Abstützteile (310) platziert ist, so dass er auf sein zweites Ende drückt, und ein Einstellmittel (380),
**dadurch gekennzeichnet, dass** der Körper (210) des oder der Blöcke (200), der den verformbaren Abschnitt umfasst, eine ebenfalls allgemein konkave Endfläche (205) aufweist, wobei die Abstützteile (310) der konkaven Kontur des Körpers (210) bei im Wesentlichen konstanter Dicke folgen.

2. Düse nach Anspruch 1, **dadurch gekennzeichnet, dass** die einstellbaren Beanspruchungsmittel eine Vielzahl von Abstützteilen (310) umfassen, die sich gemäß einer transversalen Richtung allgemein senkrecht zur Strömungsebene erstrecken, die ausgelegt und positioniert sind, um sich mit einem ersten von ihrem Ende (312) auf unterschiedlichen Teilstücken des verformbaren Abschnitts (220) abzustützen, die gemäß der transversalen Richtung der Düse entlang der Mündung des Kanals verteilt sind, wobei die zweiten Enden (314) der Abstützteile (310), die vom Düsenausgang beabstandet sind, jeweiligen Einstellmitteln (350, 380) zugeordnet sind, die geeignet sind, die Position von jedem dieser Teile (310) unabhängig von der von mindestens einem anderen Abstützteil zu verändern.

3. Düse nach einem der vorangehenden Ansprüche, **dadurch gekennzeichnet, dass**, wobei der Körper (210) des oder von mindestens einem der Blöcke (200) eine Endfläche (204) aufweist, die sich in einer allgemeinen transversalen Richtung zur Strömungsebene und neben der Ausgangsmündung (112) des Kanals erstreckt, die Beanspruchungsmittel derart ausgelegt sind, dass sich die Einstellmittel (380) der Endfläche (205) relativ zur Strömungsrichtung (L) vorgelagert erstrecken.

4. Düse nach einem der Ansprüche 1 bis 3, **dadurch gekennzeichnet, dass** jeder Hebel von einem L mit zwei Schenkeln (360, 370) gebildet ist, die auf dem Körper (210) des Blocks (200), der den einstellbaren Abschnitt (220) aufweist, rotatorisch angelenkt sind, wobei der kürzeste Schenkel (360) ein Ende (364) aufweist, das sich auf das zweite Ende (314) des entsprechenden Abstützteils (310) abstützt, um dieses Teil (310) in Richtung des verformbaren Abschnitts (220) zu drücken, wohingegen der längste Schenkel (370) mit dem Einstellmittel (380) zusammenwirkt.

5. Düse nach einem der Ansprüche 1 bis 4, **dadurch gekennzeichnet, dass** das Verhältnis zwischen zum einen dem Abstand (D2) zwischen der Rotationsachse (232) des Hebels relativ zum Körper des entsprechenden Blocks und der Abstützstelle jedes Einstellmittels (380) auf dem Hebel (210) und zum anderen dem Abstand (D1) zwischen der Rotationsachse (232) und der Abstützstelle (365) des Hebels (350) auf jedem Abstützteil (310) größer als 2 ist.

6. Düse nach einem der Ansprüche 1 bis 5, **dadurch gekennzeichnet, dass** der mit dem verformbaren Abschnitt (220) ausgestattete Block (200) eine Senke (240) besitzt, die komplementär zu einem auf dem Hebel (350) gebildeten Vorsprung (367) ist, um zu gestatten, diesen Hebel (350) und das entsprechende Abstützteil (310) in Position auf dem Block (200) zu halten.

7. Düse nach einem der vorangehenden Ansprüche, **dadurch gekennzeichnet, dass** die Endflächen (104, 204) der Blöcke (100, 200), die sich in einer allgemeinen transversalen Richtung zur Strömungsebene (101) neben der Ausgangsmündung des Kanals (112) erstrecken, konkav sind.

8. Düse nach einem der vorangehenden Ansprüche, **dadurch gekennzeichnet, dass** der verformbare Abschnitt (220) eine etwa konstante Dicke über das Wesentliche seiner Länge besitzt, aber eine hervorstehende Rippe (223) aufweist, die eine Überdicke im Bereich seines freien Endes (222) neben dem Ausgang der Düse bildet, um als Rückhalt für die Beanspruchungsmittel (300) zu dienen.

9. Düse nach einem der vorangehenden Ansprüche, **dadurch gekennzeichnet, dass** die Blöcke (100, 200) im Wesentlichen symmetrisch zur Strömungsebene (101) sind, so dass die Mündung (112) in Bezug auf den Rest der Düse einen Vorsprung bildet.

10. Düse nach einem der vorangehenden Ansprüche, **dadurch gekennzeichnet, dass** die Einstellmittel (380) mindestens ein thermisches Ausdehnungsteil umfassen, wobei das oder jedes Ausdehnungsteil imstande ist, auf das oder eins der Abstützteile einzuwirken, und mindestens ein Heizmittel, das jeweils dem oder jedem Ausdehnungsteil zugeordnet ist, um die Abmessungen des thermischen Ausdehnungsteils in Abhängigkeit von der Temperatur kontrolliert zu ändern.

11. Düse nach einem der vorangehenden Ansprüche, wobei die Einstellmittel mindestens eine Stellschraube (380) umfassen, wobei die oder jede Schraube imstande ist, auf das oder eins der Abstützteile (310) einzuwirken.

12. Düse nach einem der vorangehenden Ansprüche, **dadurch gekennzeichnet, dass** der verformbare Abschnitt (220) über die gesamte transversale Abmessung der Düse einteilig ist.

13. Düse nach einem der vorangehenden Ansprüche, **dadurch gekennzeichnet, dass** die Endflächen (104, 204) der Blöcke (100, 200), die sich in einer allgemeinen transversalen Richtung zur Strömungsebene (101) neben der Ausgangsmündung des Kanals (112) erstrecken, allgemein eine zylindrische Drehgeometrie aufweisen, komplementär zum Mantel von nachgelagerten Laminierungszylindern.

## Claims

1. A die for the manufacture of a film by extrusion, comprising two blocks (100, 200) defining between them a flow duct (110), one (200) at least of the two blocks comprising:
- a body (210) having a portion (220) configured to be elastically deformable and extending in the vicinity of an outlet mouthpiece (112) of the duct, and
- adjustable biasing means (300) of this deformable portion (220) of the body (210) to deform the deformable portion (210) to selectively modify the distance between the latter and the other block (100) of the die,
which adjustable biasing means (300) comprise:
- at least one bearing part (310) positioned to be supported on the deformable portion (220) by extending according to a general direction (V) perpendicular to a flow plane (101) at the die outlet defined by the outlet mouthpiece, each bearing part (310) comprising a first end (312) supported on the deformable portion (220), and
- adjusting means (350, 380) also mobile relative to the body (210), capable of exerting action on a second end (314) of each bearing part (310) opposite the first end (312) and away from the die outlet so as to modify the position of this part,
the biasing means comprising at least one intermediate lever (350), the or each lever being placed between the or one of the bearing parts (310), so as to be supported against its second end, and adjusting means (380),
**characterized in that** the body (210) of the block(s) (200) comprising the deformable portion comprises an end surface (205) also overall concave, the bearing parts (310) following the concave contour of the body (210) by having an essentially constant thickness.

2. The die according to claim 1, **characterized in that** the adjustable biasing means comprise a plurality of bearing parts (310) which extend according to a transversal direction generally perpendicular to the flow plane, configured and positioned to bear by a first of their ends (312) on different fractions of the deformable portion (220) distributed according to the transversal direction of the die along the mouthpiece of the duct, the second ends (314) of the bearing parts (310), away from the die outlet, being connected to respective adjusting means (350, 380) adapted to modify the position of each of these parts (310) independently of that of at least one other bearing part.

3. The die according to any of the preceding claims, **characterized in that** the body (210) of the or at least one of the blocks (200) having an end surface (204) extending in a general direction transversal to the flow plane and adjacent to the outlet mouthpiece (112) of the duct, the adjustable biasing means are configured such that the adjusting means (380) extend upstream of the end surface (205) relative to the direction of flow (L).

4. The die according to any of claims 1 to 3, **characterized in that** each lever is formed by an L having two branches (360, 370) articulated in rotation on the body (210) of the block (200) including the adjustable portion (220), the shorter branch (360) comprising an end (364) supported on the second end (314) of the corresponding bearing part (310) to push this part (310) towards the deformable portion (220), while the longer branch (370) cooperates with the adjusting means (380).

5. The die according to any one of claims 1 to 4, **characterized in that** the ratio between on the one hand the distance (D2) between the rotation axis (232) of the lever relative to the body of the corresponding block and the support point of each adjusting means (380) on the lever (210) and on the other hand the distance (D1) between the rotation axis (232) and the support point (365) of the lever (350) on each bearing part (310) is greater than 2.

6. The die according to any of claims 1 to 5, **characterized in that** the block (200) fitted with the deformable portion (220) has a depression (240) complementary to a projection (367) formed on the lever (350) to keep this lever (350) and the corresponding bearing part (310) in position on the block (200).

7. The die according to any of the preceding claims, **characterized in that** the end surfaces (104, 204) of the blocks (100, 200) which extend in a general direction transversal to the flow plane (101) adjacent to the outlet mouthpiece of the duct (112) are concave.

8. The die according to any one of the preceding claims, **characterized in that** the deformable portion (220) has a substantially constant thickness over its entire length, but has a projecting rib (223) forming an excess thickness at the level of its free end (222) adjacent to the outlet of the die to serve as restraint for the biasing means (300).

9. The die according to any of the preceding claims, **characterized in that** the blocks (100, 200) are essentially symmetrical relative to the flow plane (101) such that the mouthpiece (112) forms a projection relative to the rest of the die.

10. The die according to any of the preceding claims, **characterized in that** the adjusting means (380) comprise at least one thermal expansion part, the or each expansion part being capable of exerting action on the or one of the bearing parts, and at least one heating means connected respectively to the or each expansion part to vary the dimensions of the thermal expansion part in a controlled manner as a function of the temperature.

11. The die according to any one of the preceding claims, wherein the adjusting means comprise at least one adjusting screw (380), the or each screw being capable of exerting action on the or one of the bearing parts (310).

12. The die according to any of the preceding claims, **characterized in that** the deformable portion (220) is monobloc over the entire transversal dimension of the die.

13. The die according to any of claims 1 to 12, **characterized in that** the end surfaces (104, 204) of the blocks (100, 200) which extend in a general direction transversal to the flow plane (101) adjacent to the outlet mouthpiece of the duct (112) overall have a geometry cylindrical in revolution, complementary to the envelope of laminating cylinders located downstream.
